# EUROPÄISCHE PATENTSCHRIFT

(11) **EP 1 861 742 B1**
(45) Veröffentlichungstag und Bekanntmachung des Hinweises auf die Patenterteilung: **06.04.2011**
(21) Anmeldenummer: 06722510.2
(22) Anmeldetag: 21.02.2006
(51) Int. Cl.: G02B 21/00, G02B 21/16, G02B 5/30

(54) **PHASENFILTER FÜR DIE STED-MIKROSKOPIE**
PHASE FILTER FOR STED MICROSCOPY
LAME DE PHASE POUR MICROSCOPIE STED

(30) Priorität: 18.03.2005 DE 102005013116
(43) Veröffentlichungstag der Anmeldung: 05.12.2007
(73) Patentinhaber: Leica Microsystems CMS GmbH, 35578 Wetzlar (DE)
(72) Erfinder: GUGEL, Hilmar, 69221 Dossenheim (DE); SEYFRIED, Volker, 69226 Nussloch (DE)
(74) Vertreter: Ullrich & Naumann
(86) Internationale Anmeldenummer: PCT/DE2006/000318
(87) Internationale Veröffentlichungsnummer: WO 2006/097063

(56) Entgegenhaltungen:
- EP-A- 0 597 202
- US-A- 5 866 911
- US-A1- 2002 141 052
- KLAR T A ET AL: "Breaking Abbe's diffraction resolution limit in fluorescence microscopy with stimulated emission depletion beams of various shapes" Physical Review E (Statistical, Nonlinear, and Soft Matter Physics) APS through AIP USA, Bd. 64, Nr. 6, 2001, Seiten 066613/1-9, XP002384347 ISSN: 1063-651X

## Beschreibung

Die vorliegende Erfindung betrifft ein STED-Mikroskop mit einem Phasenfilter für einen Lichtstrahl in dem STED-Mikroskop, wobei der Phasenfilter im Strahlengang eines Stimulationslichtstrahls in dem STED-Mikroskop angeordnet ist, der anschließend fokussiert wird, mit mindestens einem ersten Teilbereich und mindestens einem bezüglich des mindestens einen ersten Teilbereichs komplementären zweiten Teilbereich, wobei mit dem mindestens einen ersten Teilbereich wechselwirkendes Licht und mit dem mindestens einen zweiten Teilbereich wechselwirkendes Licht - nach der Wechselwirkung - um 180° verschiedene Phasen aufweisen.

Ein Phasenfilter der eingangs genannten Art ist beispielsweise aus der DE 101 05 391 A1 bekannt. Der bekannte Phasenfilters weist eine Verzögerungsplatte auf, die als λ/2-Platte ausgebildet ist. Durchstrahlt ein Lichtstrahl die Verzögerungsplatte so ergibt sich für den Lichtstrahl in einem nachfolgenden Fokus eine Auslöschung des Lichtstrahls. Äußere Anteile des Lichtstrahls, die nicht durch die Verzögerungsplatte hindurchstrahlen, bleiben unausgelöscht, so dass sich im Fokus ein Lichtstrahl mit einem innen hohlen Fokus ergibt. Die Verzögerungsplatte weist dabei einen ersten Teilbereich und einen zum ersten Teilbereich komplementären zweiten Teilbereich auf, wobei das mit dem ersten Teilbereich und dem zweiten Teilbereich wechselwirkende Licht nach der Wechselwirkung um 180° oder λ/2 verschiedene Phasen aufweist. Hieraus ergibt sich eine Auslöschung der durch die beiden Teilbereiche durchstrahlenden Lichtanteile nach der Verzögerungsplatte.

Des Weiteren ist aus KLAR T. A. ET AL: "Breaking Abbe's diffraction resolution limit in fluorescence microscopy with stimulated emission depletion beams of various shapes" Pysical Review E (Statistical, Nonlinear, and Soft Matter Physics) APS through AIP USA, Bd. 64, Nr. 6, 2001, Seiten 066613/1-9, XP002384347 ISSN: 1063-651X bekannt, für bestimmte Anwendungen Phasenfilter mit bestimmten Mustern herzustellen.

Die bekannten Phasenfilter werden beispielsweise bei der STED-Mikroskopie (Stimulated Emission Depletion) eingesetzt. Durch die Phasenfilter kann eine Steigerung des Auflösungsvermögens bei Fluoreszenzanwendungen erreicht werden. Dabei werden die lateralen Randbereiche des Fokusvolumens des Anregungslichtstrahls mit einem Lichtstrahl einer anderen Wellenlänge, dem so genannten Stimulationslichtstrahl, der von einem zweiten Laser emittiert wird, beleuchtet, um dort die vom Licht des ersten Lasers angeregten Probenbereiche stimuliert in den Grundzustand zurückzuführen. Detektiert wird dann nur das spontan emittierte Licht aus den nicht vom zweiten Laser beleuchteten Bereichen, so dass insgesamt eine Auflösungsverbesserung erreicht wird. Der Phasenfilter ist dabei im Bereich des Strahlengangs des zweiten Lasers, der den Stimulationslichtstrahl erzeugt, angeordnet. Ein innen hohler Stimulationslichtstrahl wird dabei mittels der bekannten λ/2-Platte erzeugt, die in ihrem Durchmesser kleiner als der Strahldurchmesser ist und folglich überleuchtet wird.

Bei den bekannten Phasenfiltern ist das Auflösungsvermögen für viele Anwendungen oft nicht ausreichend, wobei insbesondere das Auflösungsvermögen in x- und y-Richtung aufgrund einer unsymmetrischen PSF (Point Spread Function) unterschiedlich ist. Dabei ist es besonders wünschenswert, in der Fokusmitte eines Stimulationslichtstrahls möglichst keinerlei Stimulationslicht zu haben, so dass in der Fokusmitte keinerlei Abregung eines angeregten Probenzustands ergibt. Man spricht in diesem Fall von einem Phasenfilter mit einer "guten Null".

Der vorliegenden Erfindung liegt daher die Aufgabe zugrunde, ein STED-Mikroskop mit einem Phasenfilter anzugeben, wonach eine besonders hohe Auflösung bei der STED-Mikroskopie erreicht ist.

Erfindungsgemäß wird die voranstehende Aufgabe durch ein STED-Mikroskop mit den Merkmalen des Patentanspruchs 1 sowie alternativ hierzu durch ein STED-Mikroskop mit den Merkmalen des Patentanspruchs 2 gelöst.

Danach ist der Phasenfilter gemäß Patentanspruch 1 derart ausgestaltet und weitergebildet, dass die Teilbereiche derart relativ zueinander angeordnet sind, dass sie bezüglich einer Spiegelung an einer ersten Achse komplementär symmetrisch sind, wobei durch die Spiegelung der mindestens eine erste Teilbereich in seinen komplementären mindestens einen zweiten Teilbereich übergeht, und dass sie bezüglich einer Spiegelung an einer zur ersten Achse senkrechten Achse spiegelsymmetrisch sind, wobei die erste Achse in der Richtung der Polarisation des Stimulationslichtstrahls angeordnet ist und die zu dieser Achse senkrechte Achse senkrecht zur Richtung der Polarisation des Stimulationslichtstrahls angeordnet ist, und dass die Anordnung der Teilbereiche eine weitere Spiegelsymmetrie an einer weiteren Achse oder eine Rotationssymmetrie um eine weitere Achse aufweist.

Alternativ hierzu ist der Phasenfilter gemäß Patentanspruch 2 derart ausgestaltet und weitergebildet, dass die Teilbereiche derart relativ zueinander angeordnet sind, dass sie komplementär drehsymmetrisch bezüglich einer Drehung um 360°/(2*n) mit n>2 um eine Drehachse sind, wobei durch eine derartige Drehung der mindestens eine erste Teilbereich in seinen komplementären mindestens einen zweiten Teilbereich übergeht.

In erfindungsgemäßer Weise ist erkannt worden, dass durch geschickte Anordnung der ersten und zweiten Teilbereiche die obige Aufgabe auf überraschend einfache Weise gelöst ist. Bei der ersten Alternative eines Phasenfilters ist von Bedeutung, dass die Teilbereiche zum einen bezüglich einer Spiegelung an einer ersten Achse - beispielsweise eine y-Achse in einem üblichen Mikroskop-Strahlengang - komplementär symmetrisch sind. Das bedeutet, dass eine Spiegelung erste Teilbereiche in komplementäre zweite Teilbereiche überführt. Zum andern sind die Teilbereiche derart relativ zueinander angeordnet, dass sie bezüglich einer Spiegelung an einer zur ersten Achse senkrechten Achse - beispielsweise eine x-Achse in einem herkömmlichen Mikroskop-Strahlengang - spiegelsymmetrisch sind. Durch Spiegelung an dieser senkrechten Achse ergeben sich im gespiegelten Bereich wieder erste und zweite Teilbereiche ohne komplementäre Ausgestaltung.

Bei der zweiten Alternative eines Phasenfilters sind die Teilbereiche derart relativ zueinander angeordnet, dass sie eine komplementäre Drehsymmetrie bezüglich einer Drehung um eine Drehachse aufweisen. Eine derartige Drehachse könnte beispielsweise die z-Achse, d.h. die Achse des Strahlengangs in einem Mikroskop sein. Die komplementäre Drehsymmetrie ergibt sich bezüglich einer Drehung um 360°/(2*n), wobei n>2 ist. Dabei werden nach einer derartigen Drehung um einen derartigen Winkel erste Teilbereiche in ihre komplementären zweiten Teilbereiche überführt.

Bei beiden alternativen Ausgestaltungen eines Phasenfilters ergibt sich eine besonders gute Auflösung in dem STED-Mikroskop, da die Phasenfilter zu einer sicheren Auslöschung der Mitte eines Stimulationslichtstrahls führen können.

Folglich ist mit dem erfindungsgemäßen STED-Mikroskop ein STED-Mikroskop angegeben, wonach eine besonders hohe Auflösung bei der STED-Mikroskopie erreicht ist.

Die Phasenfilter gemäß der ersten und der zweiten Alternative eignen sich für Licht jeder Polarisation, auch für zirkular polarisiertes Licht.

Bei den Phasenfiltern ist die Anordnung mehrerer erster und mehrerer zweiter Teilbereiche möglich. Je nach Anwendungsfall könnte der Phasenfilter auch durch eine Kombination mehrerer geeigneter einzeiner Phasenfilter gebildet sein.

Bei einer konkreten Ausgestaltung könnte der Phasenfilter kreisrund sein. Diese Form bietet sich im Hinblick auf eine übliche Querschnittsform eines Lichtstrahls an.

Bei einer konstruktiv besonders einfachen Ausgestaltung könnte mindestens ein Teilbereich die Form eines Segments oder Sektors aufweisen. Komplementäre Teilbereiche könnten dann ebenfalls die Form eines Segments oder Sektors aufweisen.

Bei einer besonders bevorzugten Ausgestaltung eines Phasenfilters könnte der Phasenfilter eine mittlere Region aus einem runden Phasenfilter und mindestens noch eine weitere äußere Region aus ersten und zweiten Teilbereichen aufweisen, wobei die Teilbereiche jeweils als Teil eines Kreisrings ausgebildet sind.

Mit anderen Worten ist es denkbar, um die mittlere Region mehrere äußere Regionen kreisringförmig anzuordnen, die jeweils separate Phasenfilter bilden. Hierdurch ist eine besonders präzis abgegrenzte Auslöschung des mittleren Bereichs eines Lichtstrahls möglich.

Je nach Anwendungsfall könnte der Phasenfilter ein Transmissionsphasenfilter oder ein Reflexionsphasenfilter sein. Im einen Fall wird der Phasenfilter durch den Lichtstrahl durchstrahlt und im anderen Fall wird der Lichtstrahl am Phasenfilter reflektiert. Hierzu könnte mindestens ein Teilbereich des Phasenfilters reflektierend ausgebildet sein. Bei einer besonders bevorzugten Ausgestaltung könnte mindestens ein Teilbereich eine metallische Beschichtung aufweisen. Hierdurch ist eine besonders sichere Reflexion des Lichtstrahls erreicht.

Zusammenfassend sei nochmals festgehalten, dass bei polarisiertem Licht in einer Richtung - beispielsweise entlang einer y-Achse - alle Phasenfilter geeignet sind, die bezüglich einer Spiegelung an einer Achse parallel zur Polarisationsrichtung komplementär symmetrisch und gleichzeitig bezüglich einer Achse senkrecht zur Polarisationsrichtung herkömmlich spiegelsymmetrisch sind. Weisen diese Phasenfilter noch eine weitere Symmetrie auf, beispielsweise eine Spiegelsymmetrie an einer weiteren Achse, die nicht parallel zur Polarisationsrichtung ist, oder eine Rotationssymmetrie, darin eignen sich diese Phasenfilter für Licht jeder Polarisation.

Auch eignet sich die Kombination von geeigneten Phasenfiltern. Zum Kombinieren kann eine Menge von Phasenfiltern benutzt werden, von denen jeweils nur einer pro gegebener Stelle Licht transmittiert oder aber die Summe der Transmissionen < 100% ist. Im letzten Fall müssen die Filter phasenrichtig kombiniert werden, d.h. der Gesamtphasenhub oder die Gesamtphasenänderung ergibt sich aus einer Vektoraddition. Auch eine kontinuierliche Kombination einer unendlichen Menge von Phasenfiltern ist möglich.

Es gibt nun verschiedene Möglichkeiten, die Lehre der vorliegenden Erfindung in vorteilhafter Weise auszugestalten und weiterzubilden. Dazu ist einerseits, auf die nachgeordneten Ansprüche, andererseits auf die nachfolgende Erläuterung bevorzugter Ausführungsbeispiele der erfindungsgemäßen Lehre anhand der Zeichnung zu verweisen. In Verbindung mit der Erläuterung der bevorzugten Ausführungsbeispiele der erfindungsgemäßen Lehre anhand der Zeichnung werden auch im Allgemeinen bevorzugte Ausgestaltungen und Weiterbildungen der Lehre erläutert. In der Zeichnung zeigen
- Fig. 1: in einer schematischen Darstellung ein Ausführungsbeispiel eines STED-Mikroskops mit einem Phasenfilter,
- Fig. 2: in einer schematischen Darstellung die Erklärung des Begriffs "komple- mentärer Phasenfilter",
- Fig. 3: die Erklärung des Begriffs "herkömmlicher spiegelsymmetrischer Pha- senfilter bezüglich senkrechter Achse",
- Fig. 4: in einer schematischen Darstellung die Erklärung "komplementär spie- gelsymmetrischer Phasenfilter bezüglich senkrechter Achse",
- Fig. 5: in schematischen Draufsichten zwei Ausführungsbeispiele von Phasenfiltern gemäß der ersten Alternative,
- Fig. 6: ein Ausführungsbeispiel eines Phasenfilters, der sowohl die Kriterien der ersten Alternative als auch die Kriterien der zweiten Alternative der Erfindung erfüllt,
- Fig.7: in einer schematischen Darstellung zwei Ausführungsbeispiele von Phasenfiltern gemäß der zweiten Alternative der Erfindung,
- Fig. 8: in einer schematischen Darstellung die Erzeugung von Phasenfiltern gemäß der ersten Alternative der Erfindung,
- Fig. 9: in einer schematischen Darstellung die Erzeugung von Phasenfiltern gemäß der zweiten Alternative der Erfindung und
- Fig. 10: in einer schematischen Darstellung den Aufbau eines kombinierten Phasenfilters gemäß der vorliegenden Erfindung.

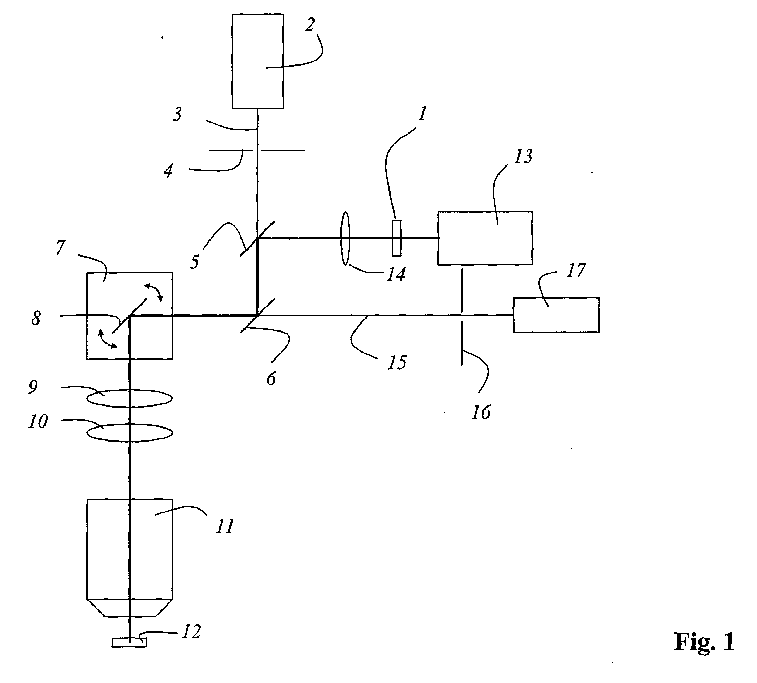

Fig. 1 zeigt in einer schematischen Darstellung ein STED-Mikroskop mit einem Phasenfilter 1. Das Mikroskop weist einen für die STED-Mikroskopie geeigneten Aufbau auf. Mit einem ersten Laser 2 wird ein Anregungslichtstrahl 3 erzeugt, der durch ein Beleuchtungspinhole 4 auf einen Strahlteiler 5 geleitet wird. Von dort wird der Anregungslichtstrahl 3 auf einen Strahlteiler 6 und in ein Scanmodul 7 mit einem Scanspiegel 8 geleitet. Nach Durchgang durch eine Scanoptik 9 und eine Optik 10 gelangt der Anregungslichtstrahl 3 in eine Mikroskopoptik 11 und auf eine Probe 12.

Zur Realisierung einer STED-Mikroskopie ist ein zweiter Laser 13 zur Erzeugung eines Stimulationslichtstrahls vorgesehen. Der Stimulationslichtstrahl wird durch den Phasenfilter 1 innen "ausgehöhlt" und wird über eine Optik 14 und den Strahlteiler 5 in den Strahlengang des Anregungslichtstrahls 3 eingekoppelt. Das aus der Fokusregion von der Probe erzeugte Anregungslicht gelangt als Detektionslicht 15 durch ein Detektionspinhole 16 auf einen Detektor 17.

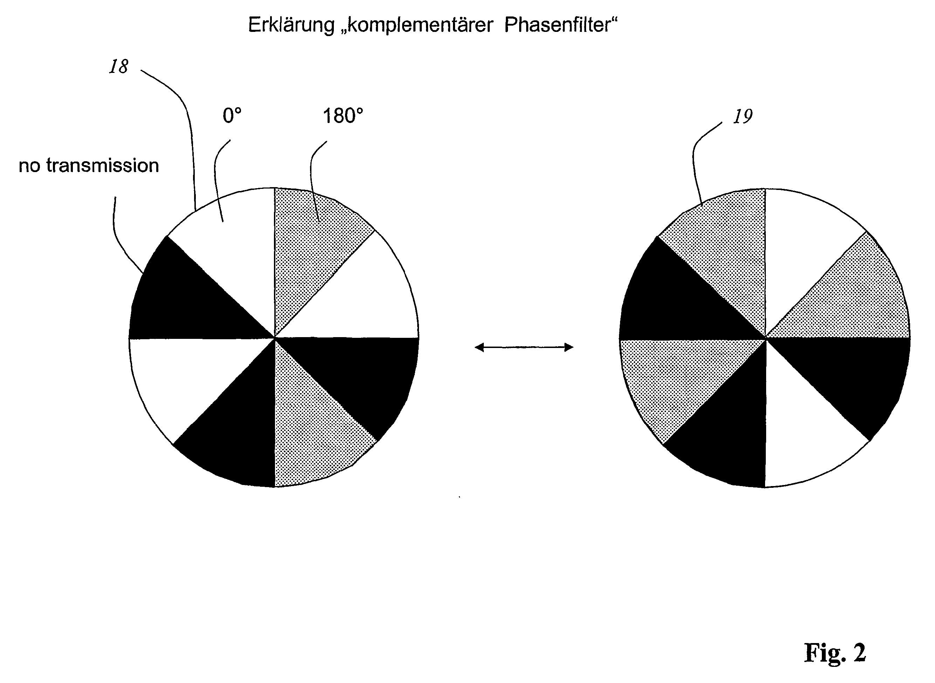

Fig. 2 erläutert in einer schematischen Darstellung den Begriff "komplementärer Phasenfilter". Bei einem "komplementären Phasenfilter" gehen Teilbereiche 18 in komplementäre Teilbereiche 19 über. Der Teilbereich 19 erzeugt bei den hier gezeigten Ausführungsbeispielen eine Phasenverschiebung um 180° oder λ/2. Entscheidend für eine geeignete Funktion des erfindungsgemäßen Phasenfilters ist jedoch grundsätzlich, dass die durch den komplementären Teilbereich 19 erzeugte Phasenänderung 180° oder λ/2 beträgt. Dabei könnte der erste Teilbereich beispielsweise eine Phasenänderung von 10° und der zweite Teilbereich eine Phasenänderung von 190° erzeugen, um die erforderliche Phasendifferenz von 180° zu realisieren.

Sowohl in Fig. 2 als auch in weiteren Figuren sind auch Bereiche des Phasenfilters dargestellt, die keinerlei Transmission - "no transmission" - zeigen. Diese Bereiche werden bei einem komplementären Phasenfilter ebenfalls in "no transmission"-Bereiche überführt.

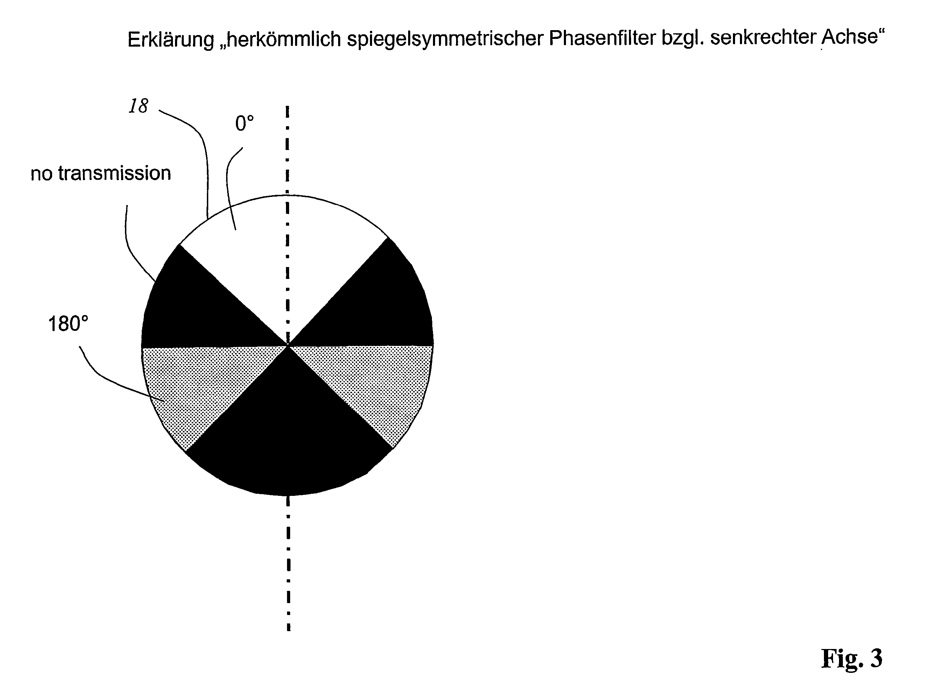

Fig. 3 erläutert des Weiteren den Begriff eines "herkömmliche spiegelsymmetrischen Phasenfilters bezüglich einer senkrechten Achse". Mit anderen Worten erfolgt hier eine Spiegelung an der in Fig. 3 durch die strichpunktierte Linie gezeigten Achse. Teilbereiche 18 auf der linken Hälfte des in Fig. 3 gezeigten Phasenfilters werden in identische Teilbereiche auf der rechten Hälfte gespiegelt.

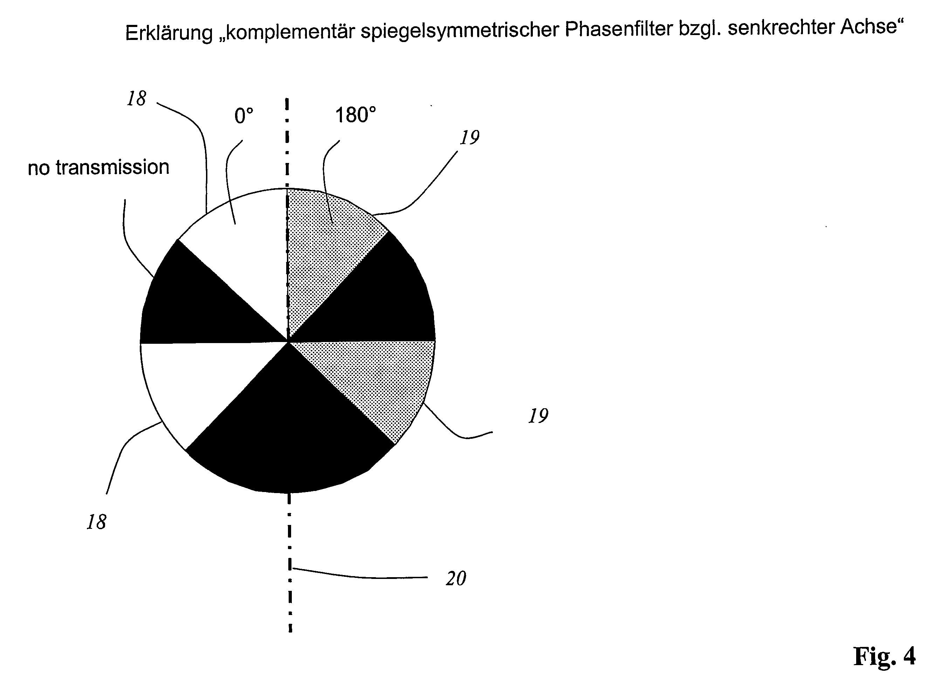

Fig. 4 erläutert den Begriff "komplementär spiegelsymmetrisch". Dabei findet eine dem Beispiel aus Fig. 3 ähnliche Spiegelung an einer durch eine strichpunktierte Linie gezeigten Achse 20 statt. Jedoch erfolgt bei der Spiegelung von der linken Hälfte in die rechte Hälfte eine komplementäre Umgestaltung eines Teilbereichs 18 in einen komplementären Teilbereich 19. Die "no transmission"-Bereiche werden wieder in "no transmission"-Bereiche überführt.

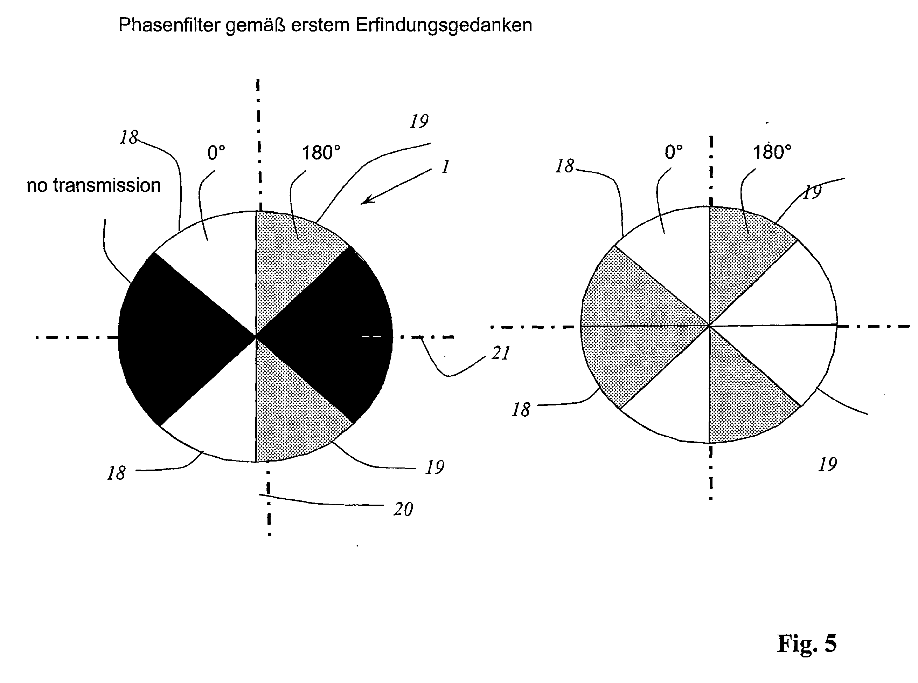

Fig. 5 zeigt nun zwei Ausführungsbeispiele von Phasenfiltern 1 gemäß dem durch den Patentanspruch 1 beschriebenen Erfindungsgedanken. Dabei findet eine komplementäre Spiegelung an der Achse 20 und eine herkömmliche Spiegelung an der Achse 21 statt. Bei Verwendung des Phasenfilters 1 zusammen mit linear polarisiertem Licht muss die Polarisationsrichtung des Lichts parallel zur Achse 20 angeordnet sein, um den gewünschten Auslöschungseffekt zu erreichen.

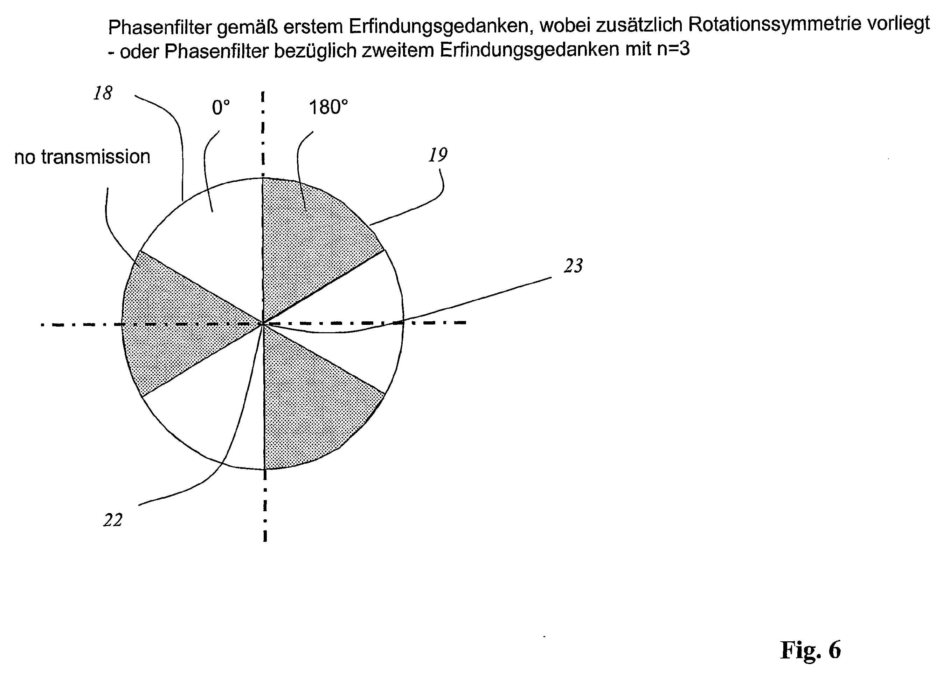

Fig. 6 zeigt in einer schematischen Darstellung ein weiteres Ausführungsbeispiel eines Phasenfilters gemäß der ersten Alternative der Erfindung wobei eine zusätzliche Rotationssymmetrie bezüglich der durch den Mittelpunkt des Phasenfilters verlaufenden weiteren Achse 23 vorliegt. Die Achse 23 verläuft senkrecht zur Zeichenebene. Der in Fig. 6 gezeigte Phasenfilter 1 genügt des Weiteren den Voraussetzungen zur Realisierung der zweiten Alternative der vorliegenden Erfindung. Dabei liegt eine Drehsymmetrie bezüglich einer Drehung um 360°/(2*n) mit n=3 vor.

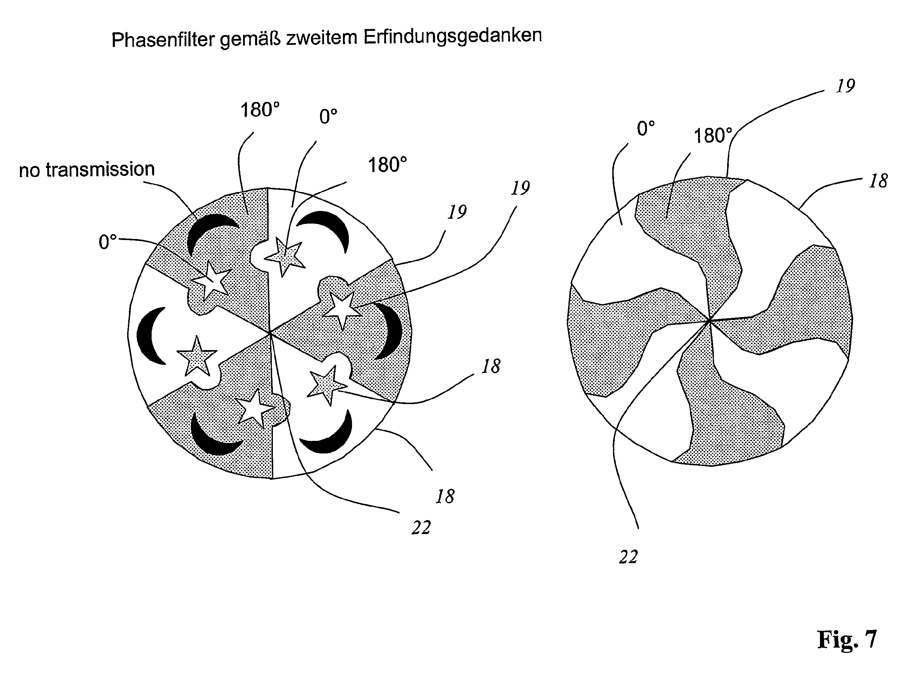

Fig. 7 zeigt in einer schematischen Darstellung zwei Ausführungsbeispiele von Phasenfiltern gemäß der zweiten Alternative der Erfindung in einer Draufsicht. Dabei sind die in den vorangegangenen Figuren als Sektoren ausgebildeten Teilbereiche noch weiter strukturiert, beispielsweise durch Sterne oder Halbmonde.

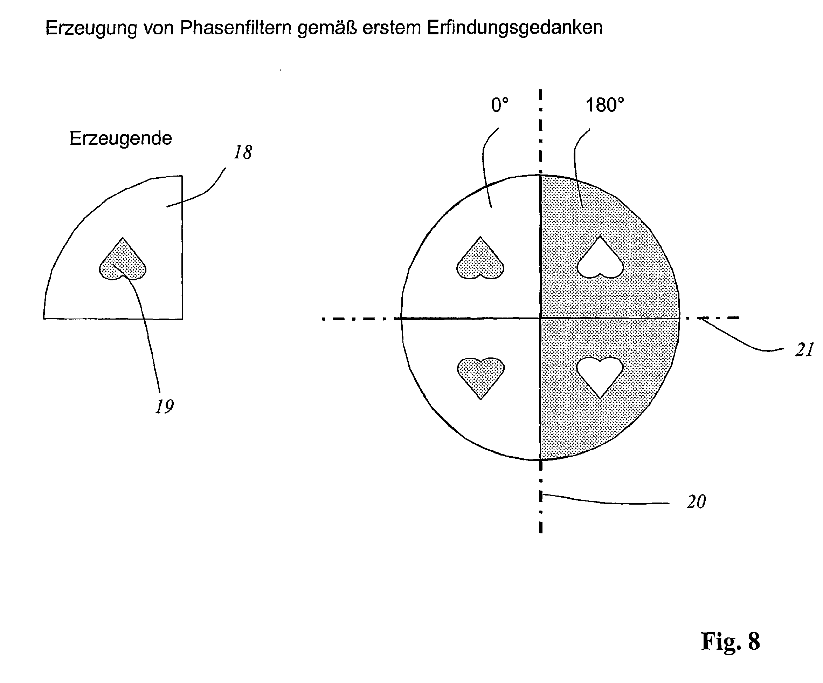

Fig. 8 zeigt in einer schematischen Darstellung die Möglichkeit der Erzeugung von Phasenfiltern gemäß der ersten Alternative oder gemäß dem ersten Erfindungsgedanken. Dabei kann ein Sektor in Form eines Viertels des kreisförmigen Phasenfilters willkürlich vorgegeben werden und anschließend eine herkömmliche und eine komplementäre Spiegelung vorgenommen werden. Die herkömmliche Spiegelung erfolgt an der Achse 21 oder einer senkrecht zur Zeichenebene verlaufenden und die Achse 21 aufweisenden Ebene. Die komplementäre Spiegelung erfolgt an der Achse 20 oder einer senkrecht zur Zeichenebene verlaufenden und die Achse 20 aufweisenden Ebene.

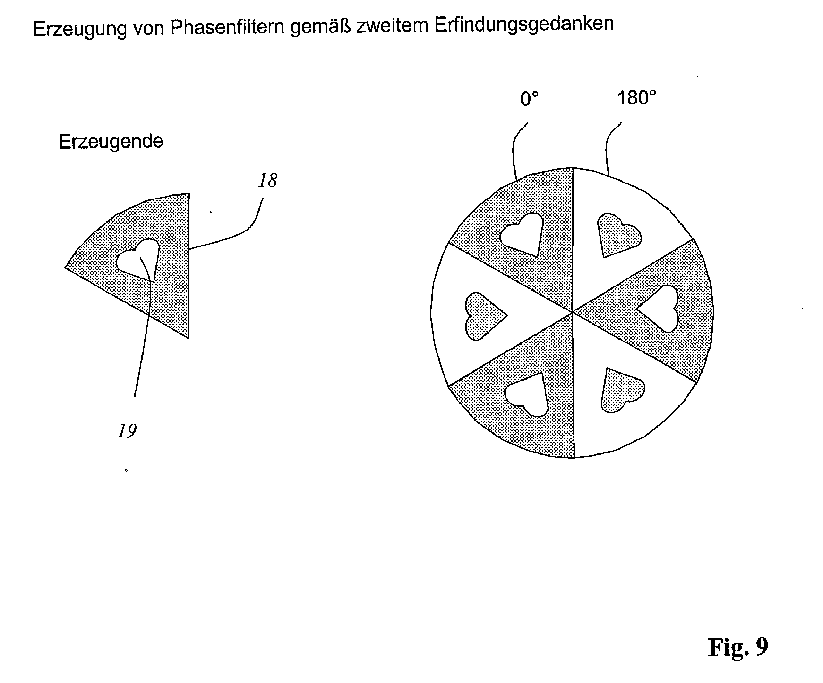

Fig. 9 zeigt in einer schematischen Darstellung die Erzeugung von Phasenfiltern gemäß der zweiten Alternative oder gemäß dem zweiten Erfindungsgedanken. Dabei kann ein Sektor eines Winkels von 360°/(2*n) willkürlich erzeugt werden. Anschließend wird der Phasenfilter sukzessive durch komplementäre Drehung aufgebaut, wobei komplementäre und ursprüngliche Sektoren aneinandergefügt werden.

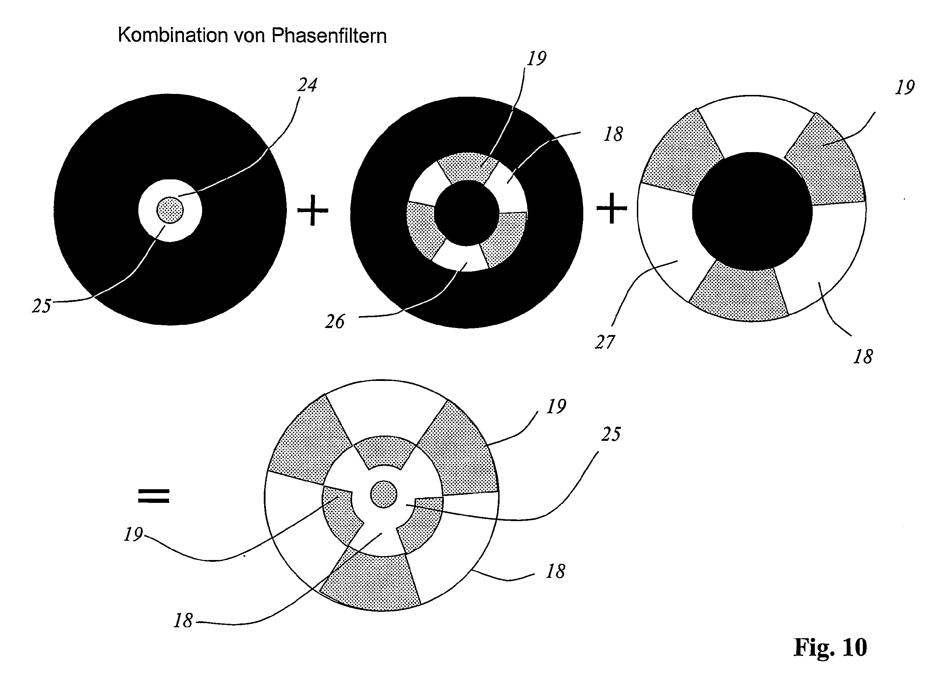

Fig. 10 zeigt in einer schematischen Darstellung die Kombination mehrerer Phasenfilter zur Realisierung eines erfindungsgemäßen Phasenfilters. Dabei wird um eine mittlere Region 24, die einen herkömmlichen runden Phasenfilter 25 aufweist, mindestens eine äußere Region 26 und im hier gezeigten Ausführungsbeispiel zwei Regionen 26 und 27 hinzugefügt. Die äußeren Regionen 26 und 27 weisen erste und zweite Teilbereiche 18 und 19 auf, die als Teil eines Kreisrings ausgebildet sind.

Zur Funktionsweise der Phasenfilter gemäß erster und zweiter Alternative bzw. gemäß erstem Erfindungsgedanken und gemäß zweitem Erfindungsgedanken sei noch die folgende theoretische Erklärung gegeben:
Erster-Erfindungsgedanke: Sei das eintretende Licht in Richtung e_{y} polarisiert und der Phasenfilter komplementär spiegelsymmetrisch bezüglich e_{y} sowie herkömmlich spiegelsymmetrisch bezüglich eₓ. Das Licht im Fokus habe zu einem bestimmten Zeitpunkt ein elektrisches Feld E - a*eₓ + b*e_{y} +c*e_{z}.

Betrachtet man die ganze Anordnung im Spiegel (Spiegelachse parallel zu eₓ, d.h. senkrecht zur Polarisationsachse), dann erhält man:
- Eingehendes elektrisches Feld gespiegelt, d. h. Phase 180°
- Phasenfilter sieht identisch aus
- elektrisches Feld im Fokus: E = a*eₓ - b*e_{y} +c*e_{z} (erhalten rein aus Spiegelung)
   bzw. E = -a*eₓ - b*e_{y} -c*e_{z} (erhalten durch Überlegung, was das um 180° phasenverschobene Licht am identischen Phasenfilter macht.)
   Daraus folgt a=-a sowie c=-c und damit a=c=0.

Betrachtet man die ganze Anordnung gespiegelt an einer Spiegelachse parallel zu e_{y}, d.h. parallel zur Polarisationsachse, dann erhält man:
- Eingehendes elektrisches Feld identisch
- Phasenfilter um 180° verschoben (da Phasenfilter komplementär spiegelsymmetrisch bei Spiegelung an dieser Achse)
- elektrisches Feld im Fokus: E = -a*eₓ + b*e_{y} +c*e_{z} (erhalten rein aus Spiegelung)
   bzw. E = -a*eₓ - b*e_{y} -c*e_{z} (erhalten durch Überlegung, was das identische Licht am um 180° phasenverschobenen Phasenfilter macht.)
   Daraus folgt b=-b und damit b-0.

Da somit a=b=c=0 ist, verschwindet das elektrische Feld im Fokus. Damit handelt es sich um einen "guten" Phasenfilter für Lichtpolarisationen entlang von e_{y}.

Hat der entsprechende Phasenfilter noch eine weitere Symmetrie, beispielsweise herkömmliche Spiegelsymmetrie an weiterer Achse, die nicht parallel zur Polarisationsrichtung ist, oder Rotationssymmetrie, dann eignet er sich auch noch für eine andere Polarisationsrichtung, die nicht parallel zu e_{y} ist. Eignet er sich aber gleichzeitig für zwei nicht parallele Polarisationen, dann eignet er sich für Licht beliebiger Polarisation.

Zweiter-Erfindungsgedanke: Sei das eintretende Licht in Richtung e_{y} polarisiert und der Phasenfilter komplementär drehsymmetrisch bezüglich einer Drehung um 360°/(2*n) mit n>2.

Zu Beginn der Überlegung gehen wir zunächst von in Richtung e_{y} polarisiertem eintretendem Licht aus. Das Licht im Fokus habe zu einem bestimmten Zeitpunkt ein elektrisches Feld E = a*e_{xy} +c*e_{z}, wobei e_{xy} den entsprechenden in der xy-Ebene liegenden Teilvektor des Lichts beschreibt.

Nun stellen wir uns das einfallende Licht mit elektrischem Feld in Richtung e_{y} als Linearkombination der beiden Vektoren e_{-360°/n} und e_{+360°/2n} geschrieben vor, wobei e_{-360°/2n} der um 360°/2n in die eine Richtung um die z-Achse verdrehte Vektor e_{y} ist und e+_{360°/n} der um 360°/2n in die andere Richtung um die z-Achse verdrehte Vektor e_{y} ist: e_{y} = P*e_{-360°/2n} + q*e_{+360°/2n}.

Beschreiben e_{xy-360°/2n} und e_{xy+360°/2n} den jeweils um ±360°/(2*n) gedrehten Vektor e_{xy}, dann gilt natürlich auch e_{xy} = p* e_{xy-360°/2n} + q* e_{xy+360°/2n}.

Dann ergibt sich bei getrennter Betrachtung der beiden Komponenten e_{-360°/2n} und e_{+360°/2n} von e_{y}, die ja aufgrund der komplementären Drehsymmetrie einen um 180° verschobenen Phasenfilter sehen, im Fokus ein elektrisches Feld der Größe
E = p*(-a*e_{xy-360°/2n} -c*e_{z}) + q*(-a*e_{xy+360°/2n} -c*e_{z}) = -a*(P*e_{xy-360°/2n} + q*e_{xy+360°/2n}) -c* (p+q)*e_{z} = -a*e_{xy}-c*(p+q)*e_{z} .

Da andererseits aber E = a*e_{xy}+c*e_{z} ist, gilt wieder a=-a und c=-(p+q)c, wobei p+q≠-1 ist, und somit a=c=0. Das Feld im Fokus verschwindet also, wenn man mit einer Polarisation parallel zu e_{y} beleuchtet. Da aber die komplementäre Drehsymmetrie bezüglich einer Drehung um 360°/(2*n) eine herkömmliche Drehsymmetrie um 360°/n (n>2) impliziert, gibt es auch andere nicht zu e_{y} parallele Polarisationen, für die der Phasenfilter ein "guter" Phasenfilter ist. Damit eignet sich der Phasenfilter aber auch für alle Linearkombinationen dieser Polarisationen sowie Mischungen davon, so dass er letztendlich für beliebig polarisiertes Licht funktioniert.

Hinsichtlich weiterer vorteilhafter Ausgestaltungen der erfindungsgemäßen Lehre wird zur Vermeidung von Wiederholungen auf den allgemeinen Teil der Beschreibung sowie auf die beigefügten Patentansprüche verwiesen.

Schließlich sei ausdrücklich darauf hingewiesen, dass die voranstehend beschriebenen Ausführungsbeispiele lediglich zur Erörterung der beanspruchten Lehre dienen, diese jedoch nicht auf die Ausführungsbeispiele einschränken.

## Patentansprüche

1. STED-Mikroskop mit einem Phasenfilter (1) für einen Lichtstrahl in dem STED-Mikroskop, wobei der Phasenfilter (1) im Strahlengang eines Stimulationslichtstrahls in dem STED-Mikroskop angeordnet ist, der anschließend fokussiert wird, mit mindestens einem ersten Teilbereich (18) und mindestens einem bezüglich des ersten Teilbereichs (18) komplementären zweiten Teilbereich (19), wobei mit dem ersten Teilbereich (18) wechselwirkendes Licht und mit dem zweiten Teilbereich (19) wechselwirkendes Licht - nach der Wechselwirkung - um 180° verschiedene Phasen aufweisen, **dadurch gekennzeichnet, dass** die Teilbereiche (18, 19) derart relativ zueinander angeordnet sind, dass sie bezüglich einer Spiegelung an einer ersten Achse (20) komplementär symmetrisch sind, wobei durch die Spiegelung der erste Teilbereich (18) in seinen komplementären zweiten Teilbereich (19) übergeht, dass sie bezüglich einer Spiegelung an einer zur ersten Achse (20) senkrechten Achse (21) spiegelsymmetrisch sind, wobei die erste Achse (20) in der Richtung der Polarisation des Stimulationslichtstrahls angeordnet ist und die zu dieser Achse (20) senkrechte Achse (21) senkrecht zur Richtung der Polarisation des Stimutationslichtstrahls angeordnet ist, und dass die Anordnung der Teilbereiche (18, 19) eine weitere Spiegelsymmetrie an einer weiteren Achse oder eine Rotationssymmetrie um eine weitere Achse (23) aufweist.

2. STED-Mikroskop mit einem Phasenfilter (1) für einen Lichtstrahl in dem STED-Mikroskop, wobei der Phasenfilter (1) im Strahlengang eines Stimulationslichtstrahls in dem STED-Mikroskop angeordnet ist, der anschließend fokussiert wird, mit mindestens einem ersten Teilbereich (18) und mindestens einem bezüglich des ersten Teilbereichs (18) komplementären zweiten Teilbereich (19), wobei mit dem ersten Teilbereich (18) wechselwirkendes Licht und mit dem zweiten Teilbereich (19) wechselwirkendes Licht - nach der Wechselwirkung - um 180° verschiedene Phasen aufweisen, **dadurch gekennzeichnet, dass** die Teilbereiche (18, 19) derart relativ zueinander angeordnet sind, dass sie komplementär drehsymmetrisch bezüglich einer Drehung um 360°/(2*n) mit n>2 um eine Drehachse (22) sind, wobei durch eine derartige Drehung der mindestens eine erste Teilbereich (18) in seinen komplementären mindestens einen zweiten Teilbereich (19) übergeht.

3. STED-Mikroskop nach Anspruch 1 oder 2, **dadurch gekennzeichnet, dass** der Phasenfilter (1) durch eine Kombination mehrerer geeigneter Phasenfilter (1) gebildet ist.

4. STED-Mikroskop nach einem der Ansprüche 1 bis 3, **dadurch gekennzeichnet, dass** der Phasenfilter (1) kreisrund ist, wobei
mindestens ein Teilbereich (18, 19) die Form eines Segments oder Sektors aufweisen kann.

5. STED-Mikroskop nach einem der Ansprüche 1 bis 4, **dadurch gekennzeichnet, dass** der Phasenfilter (1) eine mittlere Region (24) aus einem runden Phasenfilter (25) und mindestens noch eine weitere äußere Region (26, 27) aus ersten und zweiten Teilbereichen (18, 19) aufweist, wobei die Teilbereiche (18, 19) jeweils als Teil eines Kreisrings ausgebildet sind.

6. STED-Mikroskop nach einem der Ansprüche 1 bis 5, **dadurch gekennzeichnet, dass** der Phasenfilter (1) ein Transmissionsphasenfilter oder
ein Reflexionsphasenfilter ist, wobei
mindestens ein Teilbereich (18, 19) reflektierend ausgebildet sein kann.

7. STED-Mikroskop nach Anspruch 6, **dadurch gekennzeichnet, dass** mindestens ein Teilbereich (18, 19) eine metallische Beschichtung aufweist.

## Claims

1. A STED microscope having a phase filter (1) for a light beam in the STED microscope, wherein the phase filter (1) is arranged in the beam path of a stimulation light beam in the STED microscope that is subsequently focussed, having at least one first sub-region (18) and at least one second sub-region (19) that is complementary to the first sub-region (18), wherein light interacting with the first sub-region (18) and light interacting with the second sub-region (19) have phases which, after the interaction, differ by 180°, **characterised in that** the sub-regions (18, 19) are arranged relative to one another such that they are symmetric in a complementary manner with regard to a reflection at a first axis (20), wherein the reflection causes the first sub-region (18) to transition into its complementary second sub-region (19), **in that** they are mirror symmetric with regard to a reflection at an axis (21) perpendicular to the first axis (20), wherein the first axis (20) is arranged in the direction of polarisation of the stimulation light beam and the axis (21) perpendicular to this axis (20) is arranged perpendicular to the direction of the polarisation of the stimulation light beam, and **in that** the arrangement of the sub-regions (18, 19) has a further mirror symmetry at a further axis or a rotational symmetry about a further axis (23).

2. A STED microscope having a phase filter (1) for a light beam in the STED microscope, wherein the phase filter (1) is arranged in the ray path of a stimulation light beam in the STED microscope that is subsequently focussed, having at least one first sub-region (18) and at least one second sub-region (19) that is complementary to the first sub-region (18), wherein light interacting with the first sub-region (18) and light interacting with the second sub-region (19) have phases which, after the interaction, differ by 180°, **characterised in that** the sub-regions (18, 19) are arranged relative to one another such that they are rotationally symmetric in a complementary manner with regard to a rotation through 360°/(2*n) with n >2 about an axis of rotation (22), wherein such a rotation causes the at least one first sub-region (18) to transition into its complementary at least one second sub-region (19).

3. A STED microscope according to claim 1 or 2, **characterised in that** the phase filter (1) is formed by a combination of a plurality of suitable phase filters (1).

4. A STED microscope according to any one of claims 1 to 3, **characterised in that** the phase filter is circular, wherein at least one sub-region (18, 19) can be in the form of a segment or sector.

5. A STED microscope according to any one of claims 1 to 4, **characterised in that** the phase filter (1) comprises a middle region (24) from a round phase filter (25) and at least another further outer region (26, 27) from first and second sub-regions (18, 19), the sub-regions (18, 19) each being in the form of part of a circular ring.

6. A STED microscope according to any one of claims 1 to 5, **characterised in that** the phase filter (1) is a transmission phase filter or a reflection phase filter, wherein at least one sub-region (18, 19) can be constructed to be reflective.

7. A STED microscope according to claim 6, **characterised in that** at least one sub-region (18, 19) has a metal coating.

## Revendications

1. Microscope STED comprenant un filtre de phase (1) pour un faisceau de lumière dans le microscope STED, le filtre de phase (1) étant disposé dans la trajectoire d'un faisceau de lumière de simulation dans le microscope STED, lequel faisceau est focalisé ensuite, au moins une première zone partielle (18) et au moins une seconde zone partielle (19) complémentaire par rapport à la première zone partielle (18), de la lumière interagissant avec la première zone partielle (18) et de la lumière interagissant avec la seconde zone partielle (19) présentant des phases différentes de 180° - après l'interaction :
**caractérisé en ce que** les zones partielles (18, 19) sont disposées les unes par rapport aux autres de telle sorte qu'elles sont symétriques de façon complémentaire par rapport à une réflexion sur un premier axe (20), la première zone partielle (18) faisant place du fait de la réflexion à sa seconde zone partielle (19) complémentaire, **en ce qu'**elles sont symétriques par rapport à une réflexion sur un axe (21) perpendiculaire au premier axe (20), le premier axe (20) étant disposé dans la direction de la polarisation du faisceau de lumière de stimulation et l'axe (21) perpendiculaire à cet axe (20) étant disposé perpendiculairement à la direction de la polarisation du faisceau de lumière de stimulation, et **en ce que** l'agencement des zones partielles (18, 19) présente une autre symétrie de réflexion sur un autre axe ou une symétrie de rotation autour d'un autre axe (23).

2. Microscope STED comprenant un filtre de phase (1) pour un faisceau de lumière dans le microscope STED, le filtre de phase (1) étant disposé dans la trajectoire d'un faisceau de lumière de simulation dans le microscope STED, lequel faisceau est focalisé ensuite, au moins une première zone partielle (18) et au moins une seconde zone partielle (19) complémentaire par rapport à la première zone partielle (18), de la lumière interagissant avec la première zone partielle (18) et de la lumière interagissant avec la seconde zone partielle (19) présentant des phases différentes de 180° - après l'interaction,
**caractérisé en ce que** les zones partielles (18, 19) sont disposées les unes par rapport aux autres de telle sorte qu'elles sont complémentaires avec une symétrie de rotation par rapport à une rotation de 360°/(2*n) avec n>2 autour d'un axe de rotation (22), la au moins une première zone partielle (18) faisant place à sa zone partielle (19), au moins une seconde zone partielle, du fait d'une telle rotation.

3. Microscope STED selon la revendication 1 ou 2, **caractérisé en ce que** le filtre de phase (1) est formé par une combinaison de plusieurs filtres de phase (1) appropriés.

4. Microscope STED selon l'une quelconque des revendications 1 à 3, **caractérisé en ce que** le filtre de phase (1) est circulaire, au moins une zone partielle (18, 19) représentant la forme d'un segment ou d'un secteur.

5. Microscope STED selon l'une quelconque des revendications 1 à 4, **caractérisé en ce que** le filtre de phase (1) présente une région (24) centrale constituée d'un filtre de phase (25) rond et au moins également une autre région (26, 27) extérieure constituée de première et de seconde zones partielles (18, 19), les zones partielles (18, 19) étant conçues sous forme de partie d'un anneau circulaire.

6. Microscope STED selon l'une quelconque des revendications 1 à 5, **caractérisé en ce que** le filtre de phase (1) est un filtre de phase de transmission ou un filtre de phase de réflexion, au moins une zone partielle (18, 19) pouvant être conçue de façon réfléchissante.

7. Microscope STED selon la revendication 6 **caractérisé en ce qu'**au moins une zone partielle (18, 19) présente un revêtement métallique.
